(19) Europäisches Patentamt
European Patent Office
Office européen des brevets

(11) **EP 2 651 736 B1**

(12) **EUROPÄISCHE PATENTSCHRIFT**

(45) Veröffentlichungstag und Bekanntmachung des Hinweises auf die Patenterteilung:
**09.05.2018  Patentblatt 2018/19**

(21) Anmeldenummer: **11805409.7**

(22) Anmeldetag: **10.12.2011**

(51) Int Cl.:
*B60W 20/00* (2016.01)  *B60W 10/08* (2006.01)
*B60W 10/02* (2006.01)  *B60W 30/18* (2012.01)
*B60K 6/48* (2007.10)  *B60K 6/52* (2007.10)

(86) Internationale Anmeldenummer:
**PCT/EP2011/006235**

(87) Internationale Veröffentlichungsnummer:
**WO 2012/079733 (21.06.2012 Gazette 2012/25)**

(54) **VERFAHREN ZUM BETREIBEN EINER ANTRIEBSVORRICHTUNG EINES FAHRZEUGS, VORRICHTUNG, COMPUTER-PROGRAMMPRODUKT**

METHOD FOR OPERATING A DRIVE DEVICE OF A VEHICLE, DEVICE, COMPUTER PROGRAM PRODUCT

PROCÉDÉ PERMETTANT DE FAIRE FONCTIONNER UN MÉCANISME DE PROPULSION D'UN VÉHICULE, DISPOSITIF ET PRODUIT-PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2010  DE 102010056034**

(43) Veröffentlichungstag der Anmeldung:
**23.10.2013  Patentblatt 2013/43**

(73) Patentinhaber:
- **Robert Bosch GmbH**
  **70442 Stuttgart (DE)**
- **GETRAG B.V. & Co. KG**
  **74199 Untergruppenbach (DE)**

(72) Erfinder:
- **HEIDRICH, Torsten**
  **71665 Vaihingen/Enz (DE)**
- **DRESCHMANN, Sascha**
  **71272 Renningen/Malmsheim (DE)**
- **BLESSING, Uli, Christian**
  **74078 Heilbronn (DE)**

- **HELLMANN, Manfred**
  **71706 Hardthof (DE)**
- **HOFFMEISTER, Thomas**
  **70825 Korntal-Muenchingen (DE)**
- **DEUBLE, Peter**
  **71696 Moeglingen (DE)**
- **RICHTER, Boyke**
  **76228 Karlsruhe (DE)**
- **KHATCHIKIAN, Peter**
  **71701 Schwieberdingen (DE)**

(74) Vertreter: **Clarenbach, Carl-Philipp et al**
**Gleiss Große Schrell und Partner mbB**
**Patentanwälte Rechtsanwälte**
**Leitzstraße 45**
**70469 Stuttgart (DE)**

(56) Entgegenhaltungen:
EP-A1- 1 302 359       DE-A1-102008 007 119
DE-A1-102008 041 897   DE-A1-102008 061 512
DE-A1-102009 000 043

**Beschreibung**

Die Erfindung betritt ein Verfahren zum Betreiben einer Antriebsvorrichtung eines Fahrzeugs, die wenigstens einen Verbrennungsmotor und mindestens eine elektrische Maschine zum Erzeugen eines gemeinsamen Drehmoments umfasst, wobei die elektrische Maschine wahlweise abkoppelbar und ankoppelbar ist.

Ferner betrifft die Erfindung eine Vorrichtung zum Betreiben einer Antriebsvorrichtung eines Fahrzeugs, wobei die Antriebsvorrichtung wenigstens einen Verbrennungsmotor und mindestens eine elektrische Maschine zum Erzeugen eines gemeinsamen Drehmoments umfasst, und wobei die elektrische Maschine wahlweise abkoppelbar und ankoppelbar ist.

Weiterhin betrifft die Erfindung ein Computer-Programmprodukt mit einem auf einem maschinenlesbaren Träger gespeicherten Programmcode.

Stand der Technik

Verfahren, Vorrichtungen sowie Computer-Programmprodukte der eingangs genannten Art sind aus dem Stand der Technik bekannt.

Antriebsvorrichtungen, die sowohl einen Verbrennungsmotor als auch wenigstens eine elektrische Maschine umfassen, sind allgemein unter den Begriffen Hybridantrieb oder Hybridantriebsvorrichtung bekannt. Diese zeichnen sich dadurch aus, dass der Verbrennungsmotor und die elektrische Maschine gemeinsam ein Drehmoment erzeugen, das dann entweder über ein entsprechendes Getriebe auf die Antriebsräder des Fahrzeugs oder über verschiedene Antriebsräder oder -achsen auf die Fahrbahn übertragbar ist. Die elektrische Maschine kann dabei wahlweise elektromotorisch oder generatorisch betrieben werden, sodass sie entweder elektrische Energie verbraucht und ein positives Drehmoment erzeugt oder ein negatives Drehmoment sowie elektrische Energie erzeugt. Weiterhin ist es bekannt, die Verbindung zwischen der elektrischen Maschine und dem Verbrennungsmotor beziehungsweise einem Getriebe oder Zwischengetriebe derart darzustellen, dass die elektrische Maschine abkoppelbar und ankoppelbar ist, wobei unter dem Abkoppeln und Ankoppeln im Zusammenhang der vorliegenden Anmeldung insbesondere ein mechanisches Abkoppeln und Ankoppeln, beispielsweise durch eine elektromotorisch, elektromagnetisch oder hydraulisch betätigbare Kupplung, zu verstehen ist. Aus der Offenlegungsschrift DE 696 11 296 T2 ist es beispielsweise bekannt, die elektrische Maschine von einem Verbrennungsmotor abzukoppeln, sobald das Fahrzeug auf eine Reisegeschwindigkeit beschleunigt hat, um einen parasitären Zug, der auf die Antriebsvorrichtung wirkt, zu verringern. Der parasitäre Zug wird dabei durch das zum Mitschleppen der elektrischen Maschine notwendige Drehmoment bestimmt. Durch Abkoppeln der elektrischen Maschine wird somit das auf den Antriebsstrang wirkende negative Drehmoment verringert.

Die DE 10 2008 041 897 A zeigt ein Hybridfahrzeug mit wahlweise koppelbarer elektrischer Maschine. Die EP-A-1 302 359 beschreibt eine Stop-Start-Entscheidung für einen Verbrennungsmotor basierend auf einer Energiebilanz.

Offenbarung der Erfindung

Das erfindungsgemäße Verfahren zeichnet sich dadurch aus, dass zunächst eine erste Energie ermittelt wird, die zum Mitschleppen der elektrischen Maschine durch den Verbrennungsmotor voraussichtlich notwendig ist. Es wird also eine Energie bestimmt, die im angekoppelten Zustand der elektrischen Maschine zusätzlich aufgebracht werden muss, um die elektrische Maschine mitzuschleppen, wobei diese Energie unter anderem bevorzugt in Abhängigkeit von der Drehzahl des Verbrennungsmotors und/oder der elektrischen Maschine bestimmt wird. Dabei wird besonders bevorzugt bestimmt, für wie lange die elektrische Maschine voraussichtlich mindestens mitgeschleppt wird. Außerdem wird erfindungsgemäß eine zweite Energie ermittelt, die voraussichtlich zum Abkoppeln und anschließendem Ankoppeln der elektrischen Maschine notwendig ist. Die zweite Energie betrifft somit nicht das Mitschleppen beziehungsweise den Betrieb der elektrischen Maschine, sondern die Energie, die verbraucht wird, oder erwartungsgemäß verbraucht werden wird, um die elektrische Maschine zunächst abzukoppeln und zu einem späteren Zeitpunkt wieder anzukoppeln.

Schließlich wird die erste Energie mit der zweiten Energie verglichen, um eine Energiebilanz zu erstellen. Die elektrische Maschine wird erfindungsgemäß nur dann abgekoppelt, wenn die zweite Energie kleiner ist als die erste Energie. Ein Abkoppeln der elektrischen Maschine wird also nur dann zugelassen oder eingeleitet, wenn die zum Abkoppeln und Ankoppeln notwendige Energie niedriger ist als die Energie zum Mitschleppen der elektrischen Maschine, beziehungsweise wenn die Zeitdauer des voraussichtlichen Mitschleppens beziehungsweise des abgekoppelten Zustands ausreichend lang ist. Hierdurch wird die Energiebilanz der Antriebsvorrichtung des Fahrzeugs insgesamt optimiert.

Bevorzugt wird zum Ermitteln der zweiten Energie der Strombedarf einer Einrichtung zum Ab- und/oder Ankoppeln der elektrischen Maschine für das Ab-und/oder Ankoppeln bestimmt. Zum Ab- und/oder Ankoppeln umfasst die Einrichtung beispielsweise eine Kupplung, ein Schaltrelais und/oder einen elektrisch betriebenen Aktor, insbesondere zum Betätigen der Kupplung. Der Strombedarf der Einrichtung zum Ab- und/oder Ankoppeln der elektrischen Maschine wird vorzugsweise zuvor durch entsprechende Versuche bei unterschiedlichen Betriebszuständen beziehungsweise Drehmoment-Anforderungen eines Fahrers erfasst und insbesondere in einer Kennlinie oder einem Kennfeld gespeichert.

Besonders bevorzugt wird der Strombedarf in Abhängigkeit von dem Energiebedarf des elektrischen Schaltrelais zum Abkoppeln der elektrischen Maschine und von der Energie, die für eine Drehzahlregelung der elektrischen Maschine vor dem Ankoppeln notwendig ist, bestimmt. Um Drehmomentstöße auf den Antriebsstrang beim Ankoppeln zu vermeiden, ist es erforderlich, die elektrische Maschine zunächst auf eine Drehzahl hochzuregeln beziehungsweise zu synchronisieren, die der Drehzahl des Verbrennungsmotors oder eines entsprechenden Zwischengetriebes entspricht. Die zum Ab- und Ankoppeln notwendige Energie setzt sich somit im Wesentlichen aus dem Energiebedarf des Schaltrelais und der Drehzahlregelung zum Ankoppeln, beziehungsweise der Energie, die zum Hochfahren der elektrischen Maschine notwendig ist, zusammen.

Vorzugsweise wird die erste Energie in Abhängigkeit von einem Fahrerwunsch abgeschätzt. Als erste Energie wird zweckmäßigerweise eine voraussichtlich benötigte Leistung des Verbrennungsmotors bestimmt. Diese lässt sich am einfachsten in Abhängigkeit von dem Fahrerwunsch beziehungsweise von einer Drehmomentanforderung des Fahrers abschätzen. So werden bevorzugt Kriterien vorgesehen, die eine Abschätzung bezüglich der oben genannten Zeitdauer erlauben, beziehungsweise ob zu erwarten ist, dass die Drehmomentanforderung zumindest für eine Weile im Wesentlichen konstant bleibt oder ob in kurzer Zeit eine wesentliche Änderung der Drehmomentanforderung zu erwarten ist. Vorzugsweise werden hierzu insbesondere die aktuelle Drehzahl, das aktuelle Drehmoment, die aktuelle Fahrgeschwindigkeit und/oder die aktuelle Drehmomentanforderung des Fahrers berücksichtigt. Auch ist es denkbar und bevorzugt vorgesehen, dass Daten eines Navigationssystems berücksichtigt werden.

Besonders bevorzugt wird die elektrische Maschine nur dann abgekoppelt, wenn das Fahrzeug eine Mindestfahrgeschwindigkeit erreicht hat. Hierdurch wird beispielsweise erkannt, dass sich das Fahrzeug auf einer Bundes- oder Landstraße oder auf einer Autobahn befindet, sodass davon ausgegangen werden kann, dass der Fahrer für eine längere Zeit die Geschwindigkeit des Fahrzeugs zumindest im Wesentlichen beibehalten möchte. Die Mindestfahrgeschwindigkeit wird daher als Indiz dafür genommen, dass die Zeit bis zum Wiederankoppeln, insbesondere bei einer hohen Drehzahl, voraussichtlich verhältnismäßig beziehungsweise ausreichend groß ist.

Gemäß einer vorteilhaften Weiterbildung der Erfindung ist vorgesehen, dass die elektrische Maschine nur dann abgekoppelt wird, wenn eine positive Drehmomentanforderung des Fahrers unter einem Schwellenwert für einen Boostbetrieb liegt. Hierdurch wird erkannt, dass der Fahrer nicht eine wesentliche Fahrgeschwindigkeitsänderung erwirken möchte, sondern ein Weiterverfahren im Wesentlichen bei konstanter Geschwindigkeit zu erwarten ist, sodass ein zusätzliches Drehmoment durch die elektrische Maschine in nächster Zeit nicht notwendig ist.

Vorzugsweise ist weiterhin vorgesehen, dass die elektrische Maschine nur dann abgekoppelt wird, wenn ein der elektrischen Maschine zugeordneter elektrischer Speicher einen Mindestladezustand, insbesondere zwischen 60 % und 80 %, insbesondere von 70 %, aufweist. Je höher der Ladezustand des elektrischen Speichers ist, desto größer ist die Zeit, bis die elektrische Maschine wieder an den Antriebsstrang angekoppelt werden muss, um elektrische Energie zu erzeugen. Je länger die mögliche Abschaltzeit ist, desto günstiger wirkt sich das Abkoppeln der elektrischen Maschine auf die Energiebilanz der Antriebsvorrichtung aus. Vorzugsweise wird ein Grenzladezustand vorgegeben, bei dessen Erreichen ein Ankoppeln der elektrischen Maschine automatisch erfolgt. Bevorzugt liegt der Grenzladezustand bei einem Ladezustand des elektrischen Speichers von 25 bis 35 %, insbesondere von 30 %.

Vorzugsweise wird eine Bremseinrichtung des Fahrzeugs überwacht, und nur wenn kein Bremswunsch erfasst wird, ein Abkoppeln der elektrischen Maschine erlaubt beziehungsweise durchgeführt. Eine Bremsbetätigung, sei es durch den Fahrer oder ein Fahrerassistenzsystem, hat zur Folge, dass die Drehzahl die Antriebsvorrichtung zunächst verringert und in der Regel anschließend wieder beschleunigt wird. Somit kann bei Erfassen eines Bremswunsches nicht von einem konstanten Betriebszustand ausgegangen werden.

Insgesamt erlauben die oben beschriebenen Bedingungen, dass eine möglichst große Abschaltzeit gewährleistet wird, die ein Abkoppeln der elektrischen Maschine in Bezug auf die Energiebilanz der Antriebsvorrichtung sinnvoll macht. Vorzugsweise wird die elektrische Maschine weiterhin nur dann abgekoppelt, wenn der Bordnetzbedarf des Fahrzeugs niedrig und die Drehzahl der elektrischen Maschine hoch ist. Wenn der Ladebedarf des elektrischen Speichers und der Bordnetzbedarf gering sind, arbeitet die elektrische Maschine in einem ungünstigen Wirkungsgrad. Bei abwechselndem Betrieb zwischen generatorischem Betrieb und Abkoppeln erfolgt der Betrieb der elektrischen Maschine in einem günstigeren Kennfeldbereich als bei ständigem Nachladen mit geringer Maschinenlast.

Die erfindungsgemäße Vorrichtung zum Betreiben einer Antriebsvorrichtung zeichnet sich durch Mittel zur Durchführung des oben beschriebenen Verfahrens gemäß einer oder mehreren der beschriebenen Ausführungsformen aus. Es ergeben sich hierdurch die bereits genannten Vorteile. Zweckmäßigerweise umfassen die Mittel ein Steuergerät, in welchem das entsprechende Verfahren durchgeführt beziehungsweise gesteuert/betrieben wird. Insbesondere umfasst das Steuergerät dabei einen Mikroprozessor zum Ausführen eines Computer-Programms, dessen Programmcode die Durchführung des beschriebenen Verfahrens bewirkt.

Das erfindungsgemäße Computer-Programmprodukt zeichnet sich dadurch aus, dass es die Durchführung des Verfahrens nach einer oder mehreren der oben beschriebenen Ausführungsformen bewirkt, wenn das Programm auf einem Computer ausgeführt wird.

Im Folgenden soll die Erfindung anhand der Zeichnung näher erläutert werden. Dazu zeigen

Figuren 1 und 2    unterschiedliche Antriebsvorrichtungen, die jeweils einen Verbrennungsmotor sowie wenigstens eine elektrische Maschine umfassen,

Figur 3    einen Ab- und Ankoppelvorgang der elektrischen Maschine in drei Phasen und

Figur 4    die mechanische Leistung der elektrischen Maschine bei gegebener Bordnetzleistung.

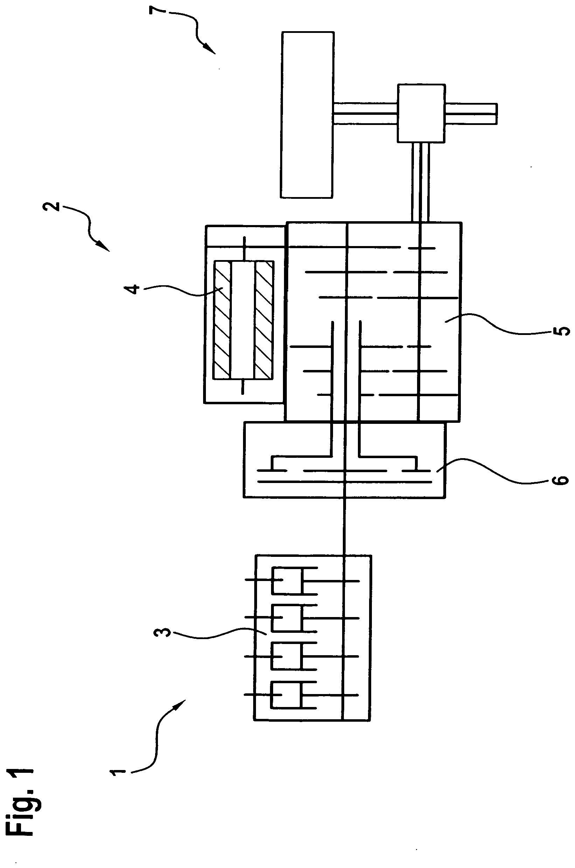

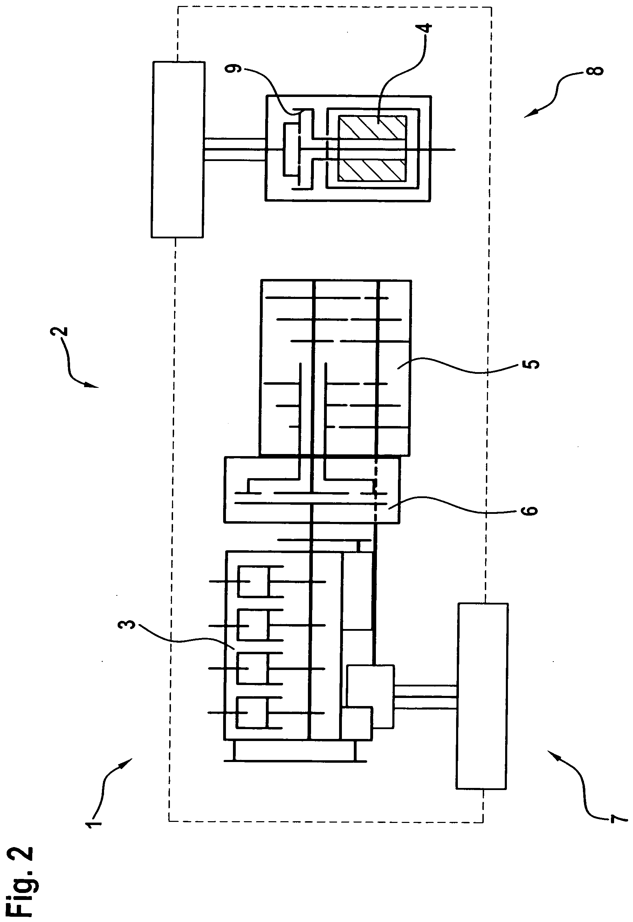

Figuren 1 und 2 zeigen jeweils in einer schematischen Darstellung eine Antriebsvorrichtung 1 eines hier nur angedeuteten Fahrzeugs 2 in jeweils einer schematischen Darstellung. Die Antriebsvorrichtung 1 umfasst einen Verbrennungsmotor 3, eine elektrische Maschine 4 sowie ein Getriebe 5, das über eine betätigbare Kupplung 6 mit dem Verbrennungsmotor 3 wirkverbindbar ist. Das Getriebe 5 ist abtriebsseitig mit einer Antriebsachse 7 des Fahrzeugs 2 verbunden. Die Antriebsvorrichtungen 1 der Figuren 1 und 2 unterscheiden sich dahingehend, dass gemäß dem Ausführungsbeispiel der Figur 1 die elektrische Maschine 4 mit dem Getriebe 5 wirkverbindbar ist, sodass ein gemeinsames Drehmoment an der Antriebsachse 7 bereitgestellt wird, und dass gemäß dem Ausführungsbeispiel der Figur 2 die elektrische Maschine 4 einer weiteren Antriebsachse 8 zugeordnet ist, und somit ein gemeinsames Drehmoment über die Antriebsachsen 7 und 8 auf die Fahrbahn gebracht wird.

Die beiden Ausführungsbeispiele haben gemeinsam, dass die elektrische Maschine 4 jeweils von der übrigen Antriebsvorrichtung des Fahrzeugs 2 abkoppelbar ist. Gemäß dem Ausführungsbeispiel von Figur 1 ist hierzu das Getriebe 5 entsprechend geschaltet oder weist ein zusätzliches Zwischengetriebe - hier nicht dargestellt - auf. In dem Ausführungsbeispiel gemäß Figur 2 ist der elektrischen Maschine 4, die auf der Antriebsachse 8 angeordnet ist, eine betätigbare Kupplung 9 zugeordnet. Die elektrische Maschine 4 ist dadurch vollständig mechanisch von der Antriebsvorrichtung 1 abkoppelbar beziehungsweise lösbar.

In bestimmten Fahrsituationen ist es energetisch sinnvoll, die elektrische Maschine 4 von der übrigen Antriebsvorrichtung 1 abzukoppeln. Wenn der Ladebedarf eines der elektrischen Maschine 4 zugeordneten elektrischen Speichers des Fahrzeugs 2 und/oder der Antriebsvorrichtung 1 und der Bordnetzbedarf des Fahrzeugs 2 gering sind, arbeitet die angekoppelte elektrische Maschine in einem ungünstigen Wirkungsgrad. Wird hingegen die elektrische Maschine 4 abgekoppelt und zum Aufladen des elektrischen Speichers wieder angekoppelt, kann der Betrieb der elektrischen Maschine in einem sehr viel günstigeren Wirkungsgrad beziehungsweise Kennfeldbereich arbeiten, als bei ständigem Nachladen mit einer geringen Maschinenlast der elektrischen Maschine 4.

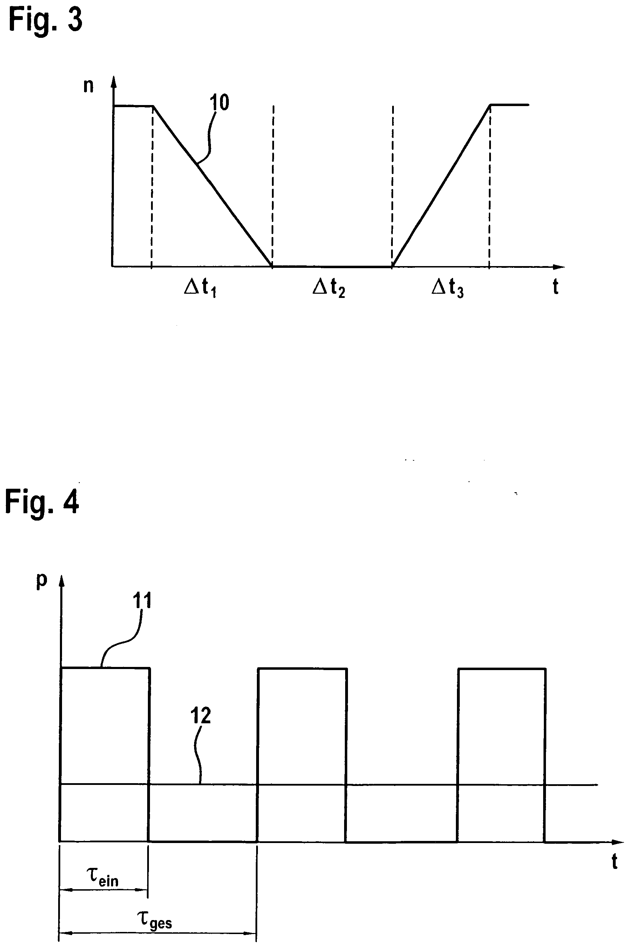

Figur 3 zeigt hierzu einen Ab- und Ankoppelvorgang der elektrischen Maschine 4 anhand eines Drehzahlverlaufs 10 der Drehzahl n der elektrischen Maschine 4 über die Zeit t. In einer ersten Phase $\Delta t_1$ erfolgt das Abkoppeln der elektrischen Maschine 4 von der Antriebsvorrichtung 1, beispielsweise durch Öffnen der Kupplung 9. Die Drehzahl n der elektrischen Maschine 4 nimmt nach dem Abkoppeln bis zum Stillstand (Drehzahl = Null Umdrehungen pro Minute) ab. Die Geschwindigkeit, mit welcher die Drehzahl bis auf Null verringert wird, hängt dabei insbesondere von dem internen Bremsmoment der elektrischen Maschine 4 ab. Eine darauffolgende, zweite Phase $\Delta t_2$ gibt die Zeit wieder, in welcher die elektrische Maschine 4 stillsteht. Durch das Abkoppeln der elektrischen Maschine 4 von der Antriebsvorrichtung 1 muss der Verbrennungsmotor 3 die elektrische Maschine 4 nicht mitschleppen, sodass der Wirkungsgrad der Antriebsvorrichtung 1 steigt.

Eine auf die zweite Phase $\Delta t_2$ folgende dritte Phase $\Delta t_3$ zeigt den Drehzahlverlauf der elektrischen Maschine 4 für den Ankoppelvorgang. Die Zeitspanne $\Delta t_3$ reicht dabei vom Stillstand der elektrischen Maschine 4 bis zum Erreichen einer synchronisierten Zieldrehzahl, die ein ruckelfreies Ankoppeln der elektrischen Maschine 4 an die Antriebsvorrichtung 1 zulässt.

Um zu bestimmen, ob ein Abkoppelvorgang mit einem anschließenden Ankoppelvorgang erfolgen beziehungsweise zugelassen werden soll, ist nunmehr vorgesehen, dass zunächst eine erste Energie $E_1$ ermittelt wird, die zum Mitschleppen der elektrischen Maschine 4 durch den Verbrennungsmotor 3 notwendig ist, dass anschließend eine zweite $E_2$ Energie ermittelt wird, die zum Abkoppeln und anschließenden Ankoppeln der elektrischen Maschine 4 notwendig ist, und dass die erste Energie $E_1$ mit der zweiten Energie $E_2$ verglichen wird, wobei nur dann, wenn die zweite Energie $E_2$ kleiner ist als die erste Energie $E_1$, ein Abkoppelvorgang der elektrischen Maschine 4 zugelassen beziehungsweise eingeleitet wird. Die Energie $E_2$ zum An- und Abkoppeln der elektrischen Maschine 4 setzt sich im Wesentlichen aus dem Bedarf einer Bestromung eines elektrischen Schaltrelais zum Abkoppeln und einer Energie für eine Drehzahlregelung der elektrischen Maschine 4 vor dem Ankoppeln zusammen. Daraus lässt sich berechnen, wie groß die Zeitspanne $\Delta t_2$ mindestens sein muss, damit die zweite Energie $E_2$ kleiner als die erste Energie $E_1$ ist.

Figur 4 zeigt dazu im Vergleich die mechanische Leistung P der elektrischen Maschine 4 über die Zeit t. Eine erste Kennlinie 11 zeigt dazu die Leistung $P_{Takt}$ der elektrischen Maschine 4 in einem Betrieb, in welchem sie wiederholt abgekoppelt und wieder angekoppelt wird. Eine zweite Kennlinie 12 zeigt die Leistung

$P_{Dauer}$ der elektrischen Maschine 4 für den Fall, dass die elektrische Maschine 4 dauerhaft angekoppelt ist. $\tau_{ein}$ bezeichnet dabei die Zeitspanne, in welcher die elektrische Maschine 4 angekoppelt ist und $\tau_{ges}$ die Zeitspanne eines gesamten Takts, in welchem die elektrische Maschine 4 angekoppelt ist und abgekoppelt und wieder angekoppelt wird.

Die mechanische Verlustleistung $P_{mech,Dauer}$ der elektrischen Maschine 4 errechnet sich wie folgt:

$$P_{mech,Dauer} = \frac{P_{el,Dauer}}{\eta_{Dauer}} = \frac{P_{BN}}{\eta_{Dauer}},$$

wobei $P_{el,Dauer}$ die elektrische Verlustleistung im Dauerbetrieb und $\eta_{Dauer}$ den Wirkungsgrad im Dauerbetrieb darstellen, und $P_{BN}$ die Leistung des Bordnetzes des Fahrzeugs 2.

Die mechanische Verlustleistung im Taktbetrieb, also mit Abkoppeln und anschließendem Ankoppeln $P_{mech,Takt}$ wird wie folgt berechnet:

$$P_{mech,Takt} = \frac{P_{el,Takt}}{\eta_{Takt}} \cdot \frac{\tau_{ein}}{\tau_{ges}} + \frac{E_2}{\tau_{ges}}.$$

Ein Vergleich von Takt- zu Dauerbetrieb der elektrischen Maschine 4 zur Deckung der Bordnetzleistung wird unter Berücksichtigung von Optimierungskriterien zum Energiegewinn durchgeführt:

$$E_{opt} = \int_0^{\tau_{ges}} P_{mech,Dauer} - P_{mech,Takt}\, dt$$

$$E_{opt} = \int_0^{\tau_{ges}} \frac{P_{BN}}{\eta_{Dauer}}\, dt - \int_0^{\tau_{ein}} \frac{P_{el,Takt}}{\eta_{Takt}}\, dt$$

$$E_{opt} = \frac{P_{BN}}{\eta_{Dauer}} \cdot \tau_{ges} - \frac{P_{el,Takt}}{\eta_{Takt}} \cdot \tau_{ein}$$

$$E_{opt} = \frac{P_{BN}}{\eta_{Dauer}} \cdot \tau_{ges} - \frac{P_{el,Takt}}{\eta_{Takt}} \cdot \frac{P_{BN} \cdot \tau_{ges} + E_2}{P_{el,Takt}}$$

$$E_{opt} = P_{BN} \cdot \tau_{ges} \cdot \left( \frac{1}{\eta_{Dauer}} - \frac{1}{\eta_{Takt}} \right) - \frac{E_2}{\eta_{Takt}}.$$

Der Wirkungsgrad der elektrischen Maschine 4 ist bei höheren Leistungen günstiger. Daher ist es energetisch besser, die elektrische Maschine 4 teilweise mit einer höheren Leistung zu betreiben, mit Ab- und anschließendem Ankoppeln, als dauerhaft in einem niedrigeren Leistungsbereich mit ungünstigen Wirkungsgraden. Je höher die Generatordrehzahl der elektrischen Maschine 4 ist, desto größer wird die eingesparte Leistung. Mit steigender Bordnetzleistung wird der Wirkungsgradunterschied kleiner. Die angekoppelte Zeit $\tau_{ein}$ lässt sich wie folgt bestimmen:

$$P_{el,Takt} \cdot \tau_{ein} = P_{BN} \cdot \tau_{ges} + E_2$$

$$\tau_{ein} = \frac{P_{BN} \cdot \tau_{ges} + E_2}{P_{el,Takt}}$$

Eine Leistungsbetrachtung bezogen auf eine optimierte Leistung $P_{opt}$ ergibt Folgendes:

$$P_{opt} = \frac{E_{opt}}{\tau_{ges}}$$

$$P_{opt} = P_{BN} \cdot \left( \frac{1}{\eta_{Dauer}} - \frac{1}{\eta_{Takt}} \right) - \frac{E_2}{\eta_{Takt} \cdot \tau_{ges}}$$

Letztendlich muss somit die Schaltzeit $\Delta t_2$ möglichst hoch sein, der Bordnetzbedarf möglichst niedrig und die Drehzahl der elektrischen Maschine möglichst hoch, damit ein Ab- und Ankoppeln der elektrischen Maschine 4 energetisch sinnvoll ist und entsprechend zugelassen oder eingeleitet wird.

Um die erste Energie mit der zweiten Energie vergleichen zu können, wobei die Abschaltzeit $\Delta t_2$ berücksichtigt wird, ist vorteilhafterweise vorgesehen, dass die Abschaltzeit $\Delta t_2$ beziehungsweise die erste Energie $E_1$ in Abhängigkeit eines Fahrerwunsches ermittelt wird. Die Abschaltzeit $\Delta t_2$ korreliert zu der ersten Energie $E_1$, die notwendig ist beziehungsweise wäre, um die elektrische Maschine 4 durch den Verbrennungsmotor mitzuschleppen, wenn sie nicht abgekoppelt wird.

Vorzugsweise wird die elektrische Maschine 4 nur dann abgekoppelt, wenn das Fahrzeug eine Mindestfahrgeschwindigkeit erreicht. Daraus kann geschlossen werden, dass sich das Fahrzeug auf einer Bundes-, Landstraße oder auf einer Autobahn befindet, sodass davon ausgegangen werden kann, dass der Fahrer für eine längere Zeit die Geschwindigkeit des Fahrzeugs konstant oder im Wesentlichen konstant halten möchte und somit eine große Abschaltzeit $\Delta t_2$ möglich beziehungsweise zu erwarten ist. Vorzugsweise wird hierbei auch geprüft, ob die Drehzahl der Antriebsvorrichtung 1 ausreichend hoch ist.

Zusätzlich oder alternativ wird der Ladezustand des elektrischen Speichers geprüft. Ist ein Mindestladezustand von insbesondere 70 % erreicht, kann die Ab-

schaltzeit $\Delta t_2$ größer ausfallen, als bei einem niedrigen Ladezustand. Vorzugsweise wird deswegen der Mindestladezustand vorgegeben, der erreicht werden muss, bevor die elektrische Maschine abgekoppelt wird. Als Grenze zum automatischen wieder Einkoppeln der elektrischen Maschine kann ein Minimalladezustand von beispielsweise 30 % vorgegeben und berücksichtigt werden.

Weiterhin wird eine Bremseinrichtung des Fahrzeugs überwacht. Sobald ein Bremswunsch, sei er durch einen Fahrer oder durch ein automatisches Assistenzsystem des Fahrzeugs eingeleitet, erfasst wird, wird ein Abkoppeln der elektrischen Maschine nicht erlaubt beziehungsweise unterbunden.

Alternativ oder zusätzlich ist vorgesehen, dass eine Drehmomentanforderung des Fahrers geprüft und mit einer Boost-Drehmomentanforderung verglichen wird. Liegt die Drehmomentanforderung unterhalb eines Schwellenwerts für den Boostbetrieb, so wird ein Abkoppeln der elektrischen Maschine 4 erlaubt. Überschreitet die Drehmomentanforderung den Schwellenwert, so wird das Abkoppeln unterbunden, da davon ausgegangen werden muss, dass der Fahrer die volle Leistung der gesamten Antriebsvorrichtung 1 zur Verfügung gestellt haben möchte.

### Patentansprüche

1. Verfahren zum Betreiben einer Antriebsvorrichtung (1) eines Fahrzeugs (2), die wenigstens einen Verbrennungsmotor (3) und mindestens eine elektrische Maschine (4) zum Erzeugen eines gemeinsamen Drehmoments umfasst, wobei die elektrische Maschine (4) wahlweise abkoppelbar und ankoppelbar ist, mit folgenden Schritten:

   - Ermitteln einer ersten Energie ($E_1$), die zum Mitschleppen der elektrischen Maschine (4) durch den Verbrennungsmotor (3) voraussichtlich notwendig ist,
   - Ermitteln einer zweiten Energie ($E_2$), die zum Abkoppeln und anschließendem Ankoppeln der elektrischen Maschine (4) voraussichtlich notwendig ist,
   - Vergleichen der ersten Energie ($E_1$) mit der zweiten Energie ($E_2$), wobei die elektrische Maschine (4) nur dann abgekoppelt wird, wenn die zweite Energie ($E_2$) kleiner ist als die erste Energie ($E_1$).

2. Verfahren nach Anspruch 1, **dadurch gekennzeichnet, dass** zum Ermitteln der zweiten Energie ($E_2$) der Strombedarf einer Einrichtung zum Ab- und/oder Ankoppeln der elektrischen Maschine (4) für das Ab- und/oder Ankoppeln bestimmt wird.

3. Verfahren nach einem der vorhergehenden Ansprüche, **dadurch gekennzeichnet, dass** der Strombedarf in Abhängigkeit von dem Energiebedarf eines elektrischen Schaltrelais zum Abkoppeln der elektrischen Maschine (4) und von der Energie, die für eine Drehzahlregelung der elektrischen Maschine (4) vor dem Ankoppeln notwendig ist, bestimmt wird.

4. Verfahren nach einem der vorhergehenden Ansprüche, **dadurch gekennzeichnet, dass** die erste Energie ($E_1$) in Abhängigkeit von einem Fahrerwunsch abgeschätzt wird.

5. Verfahren nach einem der vorhergehenden Ansprüche, **dadurch gekennzeichnet, dass** die elektrische Maschine (4) nur dann abgekoppelt wird, wenn das Fahrzeug eine Mindestfahrgeschwindigkeit erreicht hat.

6. Verfahren nach Anspruch 5, **dadurch gekennzeichnet, dass** die elektrische Maschine (4) nur dann abgekoppelt wird, wenn eine positive Drehmomentanforderung unter einem Schwellenwert für einen Boostbetrieb liegt.

7. Verfahren nach einem der vorhergehenden Ansprüche, **dadurch gekennzeichnet, dass** die elektrische Maschine (4) nur dann abgekoppelt wird, wenn ein der elektrischen Maschine (4) zugeordneter elektrischer Speicher einen Mindestladezustand, insbesondere zwischen 60 % und 80 %, insbesondere von 70 %, aufweist.

8. Verfahren nach einem der vorhergehenden Ansprüche, **dadurch gekennzeichnet, dass** eine Bremseinrichtung des Fahrzeugs überwacht wird, und nur wenn kein Bremswunsch erfasst wird, ein Abkoppeln der elektrischen Maschine (4) erfolgt.

9. Vorrichtung zum Betreiben einer Antriebsvorrichtung (1) eines Fahrzeugs, wobei die Antriebsvorrichtung wenigstens einen Verbrennungsmotor (3) und mindestens eine elektrische Maschine (4) zum Erzeugen eines gemeinsamen Drehmoments umfasst, und wobei die elektrische Maschine (4) wahlweise abkoppelbar und ankoppelbar ist, **gekennzeichnet durch** Mittel zur Durchführung des Verfahrens nach einem oder mehreren der vorhergehenden Ansprüche.

10. Computer-Programmprodukt mit einem auf einer Maschine lesbaren Träger gespeicherten Programmcode zur Durchführung des Verfahrens nach einem der Ansprüche 1 bis 8, wenn das Programm auf einem Computer ausgeführt wird.

Claims

1. Method for operating a drive device (1) of a vehicle (2), said drive device comprising at least one internal combustion engine (3) and at least one electric machine (4) for generating a common torque, wherein the electric machine (4) is selectively decouplable and couplable, said method having the following steps:

    - determining a first energy ($E_1$) that is expected to be required to drag the electric machine (4) by means of the internal combustion engine (3),
    - determining a second energy ($E_2$) that is expected to be required for decoupling and subsequently coupling the electric machine (4),
    - comparing the first energy ($E_1$) to the second energy ($E_2$), wherein the electric machine (4) is only then decoupled if the second energy ($E_2$) is less than the first energy ($E_1$).

2. Method according to claim 1, **characterised in that** in order to determine the second energy ($E_2$) the current requirement of a device for decoupling and/or coupling the electric machine (4) is determined for the decoupling and/or coupling procedure.

3. Method according to any one of the preceding claims, **characterised in that** the current requirement is determined in dependence upon the energy requirement of an electric switching relay for decoupling the electric machine (4) and in dependence upon the energy that is required for regulating the rotational speed of the electric machine (4) prior to the coupling procedure.

4. Method according to any one of the preceding claims, **characterised in that** the first energy ($E_1$) is estimated in dependence upon a driver request.

5. Method according to any one of the preceding claims, **characterised in that** the electric machine (4) is only decoupled if the vehicle has achieved a minimum travel velocity.

6. Method according to claim 5, **characterised in that** the electric machine (4) is only decoupled if a positive torque requirement is below a threshold value for a boost mode.

7. Method according to any one of the preceding claims, **characterised in that** the electric machine (4) is only decoupled if an electrical storage device that is allocated to the electric machine (4) comprises a minimum state of charge, in particular between 60% and 80%, in particular of 70%.

8. Method according to any one of the preceding claims, **characterised in that** a braking device of the vehicle is monitored and the electric machine (4) is only decoupled if no braking request is detected.

9. Device for operating a drive device (1) of a vehicle, wherein the drive device comprises at least one internal combustion engine (3) and at least one electric machine (4) for generating a common torque, and wherein the electric machine (4) is selectively decouplable and couplable, **characterised by** means for implementing the method according to any one or multiple of the preceding claims.

10. Computer program product having a program code for implementing the method according to any one of the claims 1 to 8 if the program is run on a computer, said program code being stored on a machine-readable carrier.

Revendications

1. Procédé pour faire fonctionner un mécanisme d'entraînement (1) d'un véhicule (2), qui comprend au moins un moteur à combustion interne (3) et au moins un moteur électrique (4) pour générer un couple commun, le moteur électrique (4) pouvant au choix être découplé et accouplé, comprenant les étapes suivantes :

    - déterminer une première énergie ($E_1$), qui est nécessaire de manière probable pour entraîner le moteur électrique (4) par le biais du moteur à combustion interne (3),
    - déterminer une seconde énergie ($E_2$), qui est nécessaire de manière probable pour découpler et ensuite accoupler le moteur électrique (4),
    - comparer la première énergie ($E_1$) à la seconde énergie ($E_2$), le moteur électrique (4) n'étant alors découplé que si la seconde énergie ($E_2$) est inférieure à la première énergie ($E_1$).

2. Procédé selon la revendication 1, **caractérisé en ce que**, pour déterminer la seconde énergie ($E_2$), le besoin en électricité d'un moyen pour accoupler et/ou découpler le moteur électrique (4) est défini pour le désaccouplement et/ou l'accouplement.

3. Procédé selon une des revendications précédentes, **caractérisé en ce que** le besoin en électricité est défini en fonction du besoin en énergie d'un relais de commutation électrique pour découpler le moteur électrique (4) et de l'énergie qui est nécessaire pour une régulation de la vitesse de rotation du moteur électrique (4) avant l'accouplement.

4. Procédé selon une des revendications précédentes, **caractérisé en ce que** la première énergie ($E_1$) est

estimée en fonction d'un souhait du conducteur.

5. Procédé selon une des revendications précédentes, **caractérisé en ce que** le moteur électrique (4) est découplé seulement si le véhicule a atteint une vitesse de conduite minimum.

6. Procédé selon la revendication 5, **caractérisé en ce que** le moteur électrique (4) est découplé seulement si une demande de couple positive se trouve en dessous d'une valeur seuil pour une opération Boost.

7. Procédé selon une des revendications précédentes, **caractérisé en ce que** le moteur électrique (4) est découplé seulement si un accumulateur électrique associé au moteur électrique (4) présente un état de charge minimum, en particulier entre 60 % et 80 %, et particulièrement de 70 %.

8. Procédé selon une des revendications précédentes, **caractérisé en ce qu'**un moyen de freinage du véhicule est surveillé et un désaccouplement du moteur électrique (4) est réalisé seulement si aucun souhait de freinage n'est détecté.

9. Dispositif pour faire fonctionner un mécanisme d'entraînement (1) d'un véhicule, dans lequel le mécanisme d'entraînement comprend au moins un moteur à combustion interne (3) et au moins un moteur électrique (4) pour générer un couple commun, et dans lequel le moteur électrique (4) peut au choix être découplé et accouplé, **caractérisé par** des moyens pour mettre en oeuvre le procédé selon une ou plusieurs des revendications précédentes.

10. Produit-programme informatique avec un code de programme enregistré sur un support lisible sur une machine pour mettre en oeuvre le procédé selon une des revendications 1 à 8, lorsque le programme est exécuté sur un ordinateur.

Fig. 1

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69611296 T2
- DE 102008041897 A
- EP 1302359 A